# EUROPÄISCHE PATENTSCHRIFT

(11) **EP 0 937 384 B1**
(45) Veröffentlichungstag und Bekanntmachung des Hinweises auf die Patenterteilung: **11.08.2004**
(21) Anmeldenummer: 99102224.5
(22) Anmeldetag: 05.02.1999
(51) Int. Cl.: A01F 15/00, A01F 15/07

(54) **Fahrbare Ballenpresse für Stroh, Heu oder ähnliches Halmgut**
Portable press for straw, hay or similar crop
Presse roulante pour paille, foin ou materiau similaire

(30) Priorität: 17.02.1998 DE 19806460
(43) Veröffentlichungstag der Anmeldung: 25.08.1999
(73) Patentinhaber: Welger Maschinenfabrik GmbH, 38304 Wolfenbüttel (DE)
(72) Erfinder: Wilkens, Dieter Dr.-Ing., 38302 Wolfenbüttel (DE); Geiser, Jens, 38173 Dettum (DE)

(56) Entgegenhaltungen:
- EP-A- 0 309 938
- EP-A- 0 893 053
- DE-A- 4 120 733
- DE-U- 29 711 213
- FR-A- 2 651 959

## Beschreibung

Die Erfindung betrifft eine fahrbare Ballenpresse für Stroh, Heu oder ähnliches Halmgut, welche mittels eines sich auf Laufrädern abstützenden Hauptrahmens seitlich starr mit einer Maschine zum Verpacken eines Ballens lösbar verbunden ist, wobei der Hauptrahmen auf beiden Seiten der Ballenpresse eine Trennstelle mit Fang-, Führungs- und Verriegelungsvorrichtungen sowie dazu passende Aufnahmen zur Verriegelung jeweils eines vorderen mit einem hinteren Hauptrahmenteil aufweist.

Die vorstehend beschriebene Ballenpresse lässt sich der EP-A 0893053 entnehmen. Hierbei erfolgt die Verbindung des vorderen mit dem hinteren Hauptrahmenteiles durch einen Verriegelungshaken, der von oben einen Verriegelungszapfen etwa auf dem halben Umfang umgreift. Zur Verriegelung des Verriegelungshakens mit dem Verriegelungszapfen dient ein manuell verschwenkbarer und mittels Steckbolzen arretierbarer Verriegelungskeil. Da die Trennstelle in einem schwer zugänglichen Bereich liegt, ist die Betätigung nicht nur personal- und zeitaufwändig, sondern vor allem unfallträchtig. Nachteilig ist auch, dass der hintere Rahmenteil nur unter dem Eigengewicht an einem unteren Anschlag abgestützt ist, so dass die Verpackungsvorrichtung während der Fahrt um die Achse des Verriegelungszapfens nach oben verschwenken kann und zu großen Schwingbelastungen führt, so dass der Verriegelungszapfen auch aufgrund der kleinen Hebelarmverhältnisse sehr hohen Beanspruchungen ausgesetzt ist.

Aus der DE 196 13 657 A1 sind bei einer Wechselvorrichtung für an Fahrzeuge anbringbare Geräte an der Trennstelle angeordnete Fang-, Führungs- und Verriegelungseinrichtungen sowie dazu passende Aufnahmen an sich bekannt.

Der vorliegenden Erfindung liegt die Aufgabe zugrunde, die eingangs beschriebene Ballenpresse so zu verbessern, dass eine äußerst einfache, sichere und schnelle Umstellung von Kombinationsbetrieb der Ballenpresse und der Maschine zum Verpacken der Ballen auf Solobetrieb gewährleistet ist. Ferner soll eine Verlagerung des Massenschwerpunktes bei der Kombination im Vergleich zur Solopresse berücksichtigt werden, um zulässige Stützlasten an der Zugdeichsel zum Schlepper einzuhalten.

Diese Aufgabe wird ausgehend von der eingangs beschriebenen Ballenpresse dadurch gelöst, dass die Verbindung zwischen vorderem und hinterem Hauptrahmenteil durch beidseitige Flanschverbindungen erfolgt, welche selbsttätig verriegelbar sind.

Erfindungsgemäß erfolgt das An- und Abkuppeln der Maschine zum Verpacken eines Ballens nunmehr im Einmannverfahren vom Schleppersitz aus. Die beidseitigen Flanschverbindungen ermöglichen ein automatisches Ausrichten der zu verbindenden Rahmenteile als Voraussetzung für eine einfache, sichere und schnelle Kuppel- und Entkuppelbarkeit der Verbindung mit selbsttätigen Verriegelungsvorrichtungen. Jegliche manuelle Tätigkeiten im Gefahrenbereich entfallen dadurch.

In weiterer Ausgestaltung der Erfindung wird vorgeschlagen, dass die Ballenpresse und/oder die Maschine zum Verpacken eines Ballens mit Folie wenigstens eine Anhebevorrichtung aufweisen / aufweist mittels der wenigstens ein Hauptrahmenteil parallel zu seiner Horizontallage absenkbar bzw. anhebbar ist zum automatischen Entkuppeln bzw. Kuppeln von Ballenpresse und Maschine zum Verpacken des Ballens mit Folie.

Hinsichtlich der Berücksichtigung eines bei der Kombination nach hinten verschobenen Massenschwerpunktes zur Deichselstützlasteinstellung wird vorgeschlagen, dass wenigstens eine Achse, ein Tandemachsaggregat oder jedes Laufrad einzeln im wesentlichen in Längsrichtung der Ballenpresse durch Betätigung eines Stellorganes verschieb- oder verschwenkbar ist und bei Kombinationsbetrieb von Ballenpresse und Maschine zum Verpacken eines Ballens mit Folie nach hinten versetzt angeordnet ist relativ zu deren Position beim Solobetrieb der Ballenpresse.

Bekannte Kombinationsgeräte verteilen die erheblich höheren Traglasten bereits auf ein Tandemachsaggregat. Hierzu wird vorgeschlagen, dass an jeder Seite der Ballenpresse zwei Laufräder angeordnet sind, die in Fahrtrichtung hintereinander beidendig an Doppelschwingen gelagert sind, die ihrerseits um quer zur Fahrtrichtung liegende, mit den vorderen Hauptrahmenteilen oder mit dem Ballenpressenrahmen verbundenen Pendelachsen schwingbar sind, wobei der Hauptrahmen durch wenigstens ein Laufradpaar mittels eines Stellorganes anhebbar bzw. absenkbar ist. Außer der guten Bodenanpassung der Kombination gestattet diese Ausführung an Achsstummeln gelagerte Laufräder, während eine durchgehende Achse zumindest im hinteren Bereich die Ballenübergabe von Presse zu Verpackungsmaschine erschweren würde.

Ein besonders einfaches Anheben der Ballenpresse zum Kuppeln bzw. Entkuppeln der Verpackungsmaschine und gleichzeitig ein sehr einfaches Verfahren des Tandemachsaggregates zur Stützlasteinstellung wird dadurch erzielt, dass beide Seiten der Pendelachse bzw. die Doppelschwingen durch vertikal oder nahezu vertikal angeordnete Tragschwingen mit dem vorderen Hauptrahmenteil verbunden und verstellbar sind. Für den Soloeinsatz der Ballenpresse können beide Seiten des Tandemachsaggregates durch hydraulisches Verschwenken der vertikal angeordneten Schwingen um z. B. 70 bis 100 cm in Fahrtrichtung verfahren werden. Diese Position erhöht die Wendigkeit der Presse und verringert die Stützlasten an der Zugdeichsel zum Schlepper. Zur Kupplung von Ballenpresse und Verpackungsmaschine wird der hintere Hauptrahmenteil in den vorderen Hauptrahmenteil eingehängt und das Achsaggregat aus seiner vorderen tiefen Position soweit nach hinten verschoben, bis die Tragschwingen die Verpackungsmaschine anheben, um deren Stützfüße zu entfernen. Durch entsprechendes weiteres Verfahren des Tandemachsaggregates nach hinten senkt sich der vordere Hauptrahmenteil wieder ab und verriegelt selbsttätig die beiden Hauptrahmenteile. Gleichzeitig wird durch das Verschieben des Achsaggregates nach hinten der nach hinten verlagerte Massenschwerpunkt berücksichtigt, um insbesondere auch negative Stützkräfte auf die Zugvorrichtung zu vermeiden. Diese Ausführungsform gestattet auch, dass die Verpackungsmaschine mittels eines Adapters zum Solobetrieb in die Dreipunkthydraulik des Schleppers gehängt wird. Sowohl Soloballenpresse als auch die Kombination können bremsbar und / oder federnd ausgebildet sein.

Eine andere Gestaltung der Erfindung sieht vor, dass jedes Laufrad einzeln federnd und / oder hydraulisch beweglich an einer gezogenen Schwinge aufgehängt ist, wobei ein vorderes Laufradpaar der Ballenpresse und ein hinteres Laufradpaar der Maschine zum Verpacken eines Ballens mit Folie zugeordnet ist mit dazwischengelegener Trennstelle des Hauptrahmens. Zur genauen Ausrichtung der Verbindungsflansche der Trennstelle kann die Höhe der Ballenpresse hydraulisch vom Schleppersitz angepasst werden. Das Tandemachsaggregat ist leicht trennbar mit voller Anpassbarkeit der Einzelachsen. Das gefederte Fahrwerk gestattet höhere Fahrgeschwindigkeiten. Die vorderen Laufräder sind vorteilhaft mit Bremsen auszugestalten, wodurch auch die Solo-Ballenpresse nach der Trennung bremsbar bleibt.

Weitere Merkmale und Vorteile der Erfindung ergeben sich aus den übrigen Unteransprüchen und aus der nachfolgenden Beschreibung.

In der Zeichnung sind zwei Ausführungsbeispiele dargestellt. Es zeigt
- Fig. 1: eine Seitenansicht einer erfindungsgemäßen Ballenpresse mit einer aufgesattelten Maschine zum Verpacken der Ballen mit Folie und nach hinten gefahrenem Achsaggregat,
- Fig. 2: eine Ansicht nach Figur 1 bei abgehängter Maschine zum Verpacken der Ballen mit Folie und nach vorn gefahrenem Achsaggregat,
- Fig. 3: in Seitenansicht die Maschine zum Verpacken der Ballen mit Folie mittels Adapter angehängt in die Dreipunkthydraulik eines Zugschleppers,
- Fig. 4: eine Seitenansicht eines zweiten Ausführungsbeispieles einer erfindungsgemäßen Ballenpresse mit einer aufgesattelten Maschine zum Verpacken der Ballen mit Folie und Einzelradaufhängung hydraulisch gefedert,
- Fig. 5: eine Ansicht nach Figur 4 bei abgehängter Maschine zum Verpacken der Ballen und
- Fig. 6: die Verriegelung von Ballenpresse und Maschine zum Verpacken der Ballen mit Folie als Einzelheit in vergrößertem Maßstab mit Ansichten von vorn und hinten im abgehängten Zustand der Maschine zum Verpacken der Ballen.

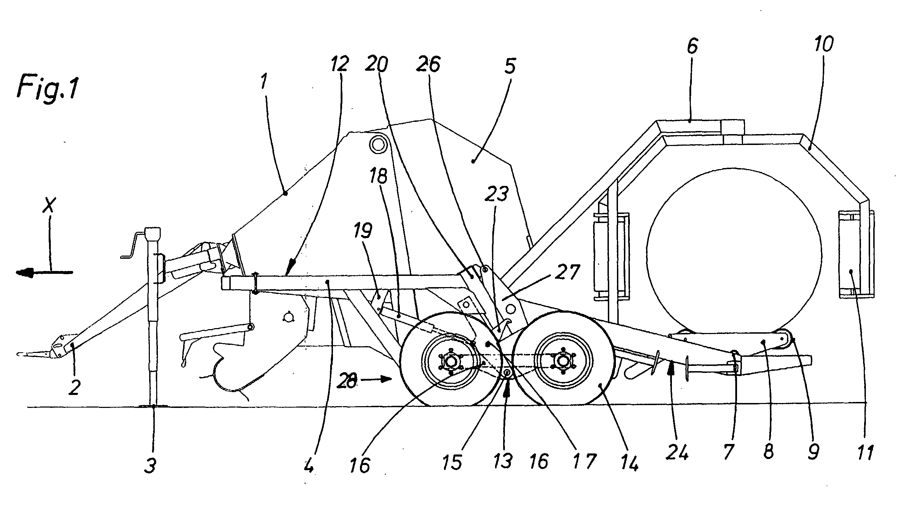

In Figur 1 ist eine Rundballenpresse 1, wie sie z. B. aus der DE-PS 2443838 bekannt ist, mit einer Zugdeichsel 2 zum Anhängen an einen nicht dargestellten Schlepper und mit einem Stützfuß 3 zum Abstellen der Presse gezeigt. Die Rundballenpresse 1 ist auf beiden Seiten fest mit einem im wesentlichen horizontal verlaufenden Hauptrahmen 4 verbunden, welcher sich über ein nach oben aufschwenkbares Pressengehäuseteil 5 nach hinten hinauserstreckt und eine Maschine 6 zum Verpacken der Ballen mit Folie trägt, bestehend aus einem um eine quer zur Fahrtrichtung X liegende Achse 7 nach vom und hinten kippbaren Wickeltisch 8 mit antreibbaren Rollen 9, die einen Rundballen aufnehmen und einem um eine hochgelegene, vertikale Achse drehbaren Doppel-Wickelarm 10 mit zwei Folienrollen 11, der den sich drehenden Rundballen während seiner Rotation um eine horizontale Zylinderachse umkreist und dabei mit Folie einwickelt.

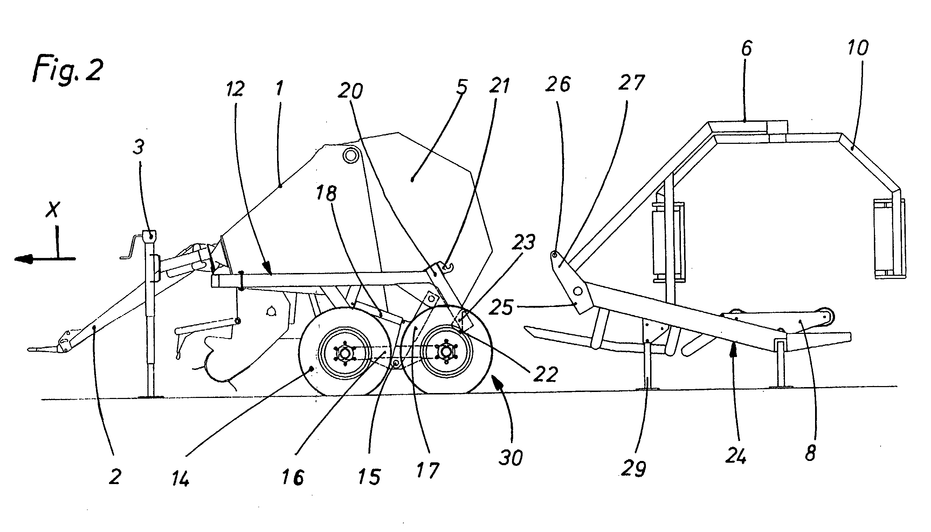

Der Hauptrahmen 4 ist zweiteilig ausgeführt, wobei ein vorderes, zur Rundballenpresse gehöriges Rahmenteil 12 sich auf einem zweiachsigen Fahrwerk 13 abstützt. Das Fahrwerk 13 besitzt auf jeder Pressenseite zwei hintereinanderangeordnete Laufräder 14, die an einer um eine horizontal und quer zur Fahrtrichtung liegenden Achse 15 pendelbar gelagerten Doppelschwinge 16 angeordnet sind. Die Laufräder 14 sind mittels Achsstummel an der Doppelschwinge 16 gelagert. Jede Pendelachse 15 ist über eine etwa vertikal angeordnete Tragschwinge 17 mit dem vorderen Rahmenteil 12 verbunden. Etwa mittig zwischen den beiden Gelenken der Tragschwinge 17 greift ein sich etwa in Fahrtrichtung erstreckender Hydrozylinder 18 an der Tragschwinge 17 an, der anderenends an einem nach unten gerichteten Träger 19 angelenkt ist. Der vordere Rahmenteil 12 endet auf jeder Seite der Presse in rückwärtiger Richtung mit einem schräg von vom oben nach hinten unten abfallenden Flanschteil 20, das oben einen festen, nach oben offenen Fanghaken 21 und unten eine nach unten offene, um eine Achse 22 schwenkbare Verriegelungsklinke 23 aufweist, wie am besten aus Figur 2 ersichtlich ist.

Der hintere Rahmenteil 24 weist an seinem vorderen Ende auf beiden Seiten der Presse einen unteren 25 und oberen Querbolzen 26 auf, die fest in einem U-förmigen, in Fahrtrichtung offenen Gegenflansch 27 angeordnet sind, so dass diese mit dem Fanghaken 21 und der Verriegelungsklinke 23 in Eingriff bringbar sind.

In Figur 1 ist der verriegelte Zustand von vorderem 12 und hinterem Rahmenteil 24 gezeigt. Der obere Querbolzen 26 liegt in dem oberen Fanghaken 21. Die Verriegelungsklinke 23 übergreift den unteren Querbolzen 25. Dadurch, dass die Tragschwinge 17 mit dem Rücken gegen die Verriegelungsklinke 23 drückt, ist eine formschlüssige Verriegelung gewährleistet. Der Hydrozylinder 18 befindet sich in ausgefahrener Stellung und das zweiachsige Fahrwerk 23 befindet sich in hinterer Position 28, so dass die Stützlast an der Zugdeichsel 2 trotz aufgesattelter Maschine 6 zum Verpacken der Ballen mit Folie keine negativen Werte annimmt, wie es der Fall wäre, wenn die Rundballenpresse die Achsanordnung gemäß Solobetrieb hätte.

Während des Betriebes ist die Rundballenpresse 1 an einen Schlepper angehängt, der Stützfuß 3 ist hochgestellt. Ist ein Ballen fertiggepresst und z. B. mit Netz umschnürt, wird das hintere Pressengehäuseteil 5 hochgeschwenkt und der Ballen auf einen rostartigen Zwischenboden geworfen, der nach rückwärts geneigt ist, so dass der Ballen auf den nach vom gekippten Wickeltisch 8 rollt und dann in Horizontalstellung des Wickeltisches 8 mit Folie umhüllt und anschließend durch Nachhintenkippen des Wickeltisches 8 abgelegt wird.

Soll nun beispielsweise Stroh gepresst werden, das also nicht mit Folie umhüllt wird, so lässt sich die Kombination äußerst schnell auf Solobetrieb wie folgt umstellen:

Man fährt den Hydrozylinder 18 etwa die Hälfte ein. Durch die Anordnung der Tragschwinge 17, wird dabei der Hauptrahmen 4 nach oben und das zweiachsige Fahrwerk 13 nach vorn geschoben. Man klappt nun die Stützfüße 29 am hinteren Rahmenteil 24 aus und fährt das Fahrwerk 23 etwas nach vorn, wodurch sich der Hauptrahmen 4 absenkt und eine selbsttätige Entriegelung von Fanghaken 21 / Bolzen 26 und Verriegelungsklinke 25 / Bolzen 23 stattfindet, die selbsttätig nach oben schwenken, da ihr Rücken aufgrund der weggeschwenkten Tragschwinge 17 frei ist. Damit die Stützkräfte an der Zugdeichsel die vorgeschriebenen Werte einnehmen, wird nunmehr durch Einfahren des Fahrwerkes dieses in seine vordere Position 30 gebracht. Nach Lösen der Hydro- / bzw. Elektroverbindungen ist die Presse allein betriebsbereit.

Statt der pendelbar gelagerten, ungefederten Doppelschwingachse kann auch eine nicht dargestellte gefederte Tandemachse mit Verbundschwinge verwendet werden.

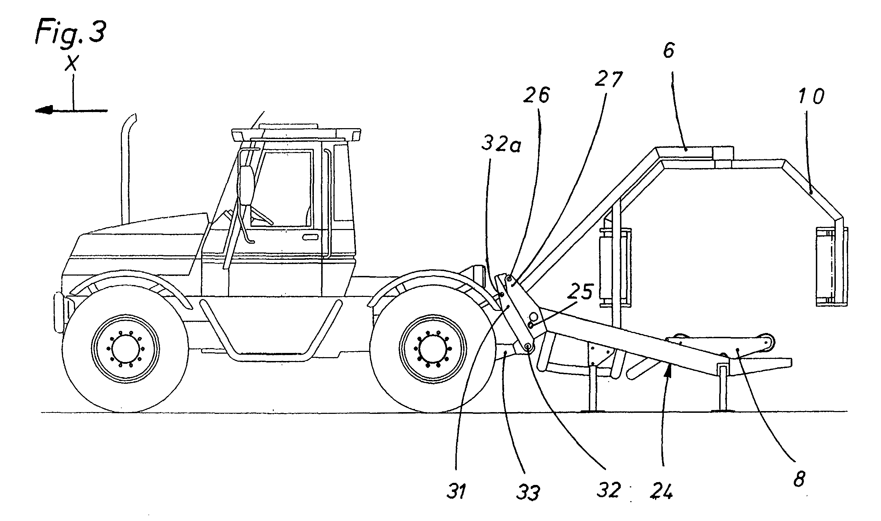

In Figur 3 ist die Verpackungsmaschine 6 aus Figur 2 mittels eines Adapterteiles 31 mit dem Schlepper verbunden, das einerseits die Anhängebolzen 32, 32a für die Schlepperdreipunkthydraulik-Anlenkung 33 und andererseits nicht dargestellte Fanghaken und Verriegelungsklinken gemäß Fig. 1 und 2 für die Querbolzen 25, 26 des hinteren Rahmenteiles 24 aufweist, so dass auch die Verpackungsmaschine allein betriebsbereit ist.

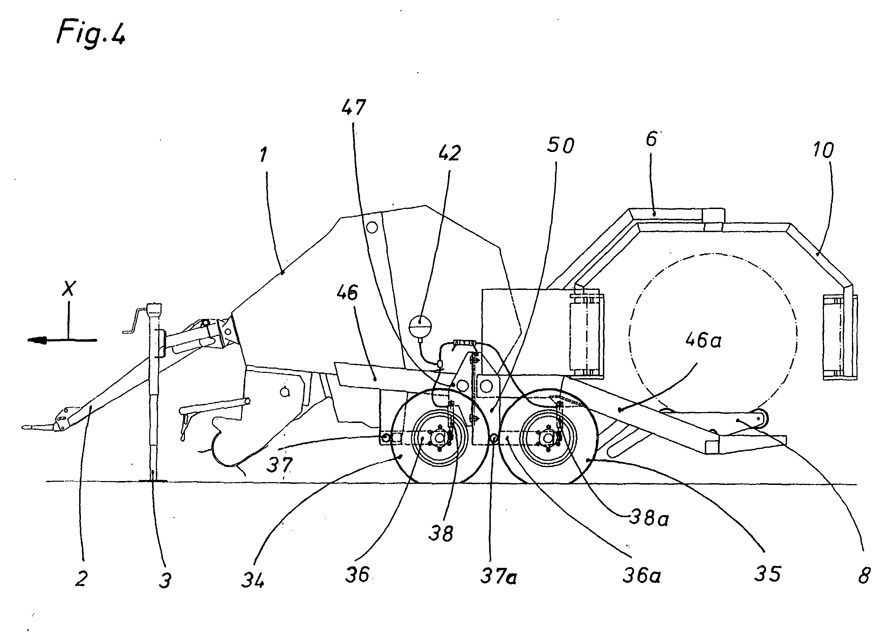

In dem Ausführungsbeispiel nach den Figuren 4 bis 6 sind auch vier Laufräder 34, 35 für die Kombination vorgesehen, jedoch ist der Rundballenpresse 1 auf beiden Seiten ein Laufrad 34 zugeordnet und auch die Verpackungsmaschine 6 weist auf beiden Seiten ein Laufrad 35 auf. Jedes Laufrad 34, 35 ist in gezogener Anordnung an je einer Schwinge 36, 36a aufgehängt, die einenends um Achsen 37, 37a schwenkbar sind und sich anderenends an Hydrozylindern 38, 38a abstützen, die zwischen Schwinge 36, 36a und Rahmen 46, 46a angeordnet sind. Alle vier Hydrozylinder 38, 38a sind über Ölleitungen 40, 41 miteinander verbunden. Das Hydrauliksystem weist außerdem einen Hydrospeicher 42, zwei Absperrhähne 43, 44, einen Schnellkuppelverschluss 45 und eine nicht dargestellte Verbindungsleitung zur Schlepperhydraulik auf.

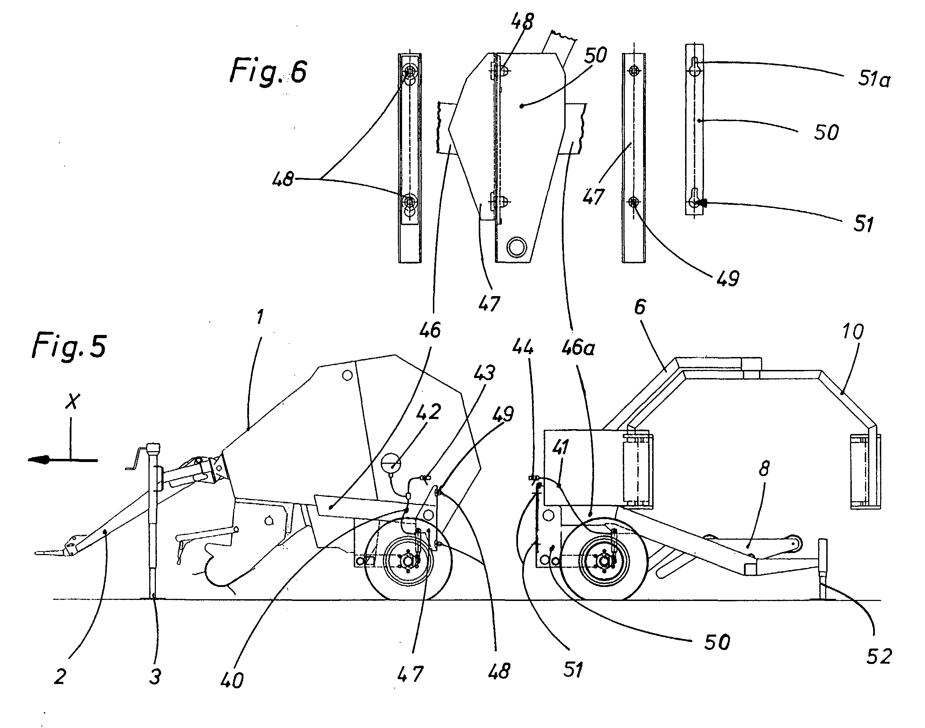

Der Hauptrahmen 46, 46a ist zweigeteilt ausgeführt, wobei der pressenseitige Flansch 47 auf beiden Seiten der Rundballenpresse 1 einen oberen und unteren Zentrierzapfen 48 mit einer Ringnut 49 aufweist, während der wickelgerätseitige Flansch 50 zu den Zentrierzapfen 48 passende schlüssellochförmige Ausnehmungen 51 aufweist, wie am besten aus Figur 6 ersichtlich ist.

Im angekuppelten Zustand von Rundballenpresse 1 und Verpackungsmaschine 6 gemäß Figur 4 greifen die Ringnutquerschnitte 49 in eine rechteckförmige Aussparung 51a ein, so dass eine formschlüssige Verriegelung gewährleistet ist. Der Schnellkuppelverschluss 45 verbindet die Ölleitungen 40 der Rundballenpresse mit denen 41 der Verpackungsmaschine 6. Die Absperrhähne 43, 44 sind geöffnet und das Hydrauliksystem ist mittels der Schlepperhydraulik auf einen Druckwert gebracht, der eine Federung der Kombination über den Hydrospeicher 42 gestattet. Die Laufräder der Rundballenpresse können mit nicht dargestellten Bremsen für höhere Transportgeschwindigkeiten ausgestattet sein.

Zum Entkuppeln von Rundballenpresse 1 und Verpackungsmaschine 6 wird die Kombination bei geschlossenem Absperrhahn 44 durch Beaufschlagung der Hydrozylinder 38 angehoben, und die Verpackungsmaschine auf Stützfüße 52 abgesetzt, welches durch geringfügiges Absenken der Rundballenpresse 1 erfolgt, so dass die Zentrierzapfen 48 nach unten aus den rechteckförmigen Ausnehmungen 51 gleiten, wodurch die Entriegelung beider Einheiten 1, 6 stattfindet. Der Absperrhahn 43 wird geschlossen und der Schnellkuppelverschluss 45 getrennt. Beide Einheiten 1, 6 sind nunmehr auf eigenen Laufrädern 34 bzw. 35 im Solobetrieb einsetzbar. Da sowohl die Verpackungsmaschine 6 eigene Laufräder 35 hat als auch die Ballenpresse 1 sind keine Achsverschiebungen nötig.

## Patentansprüche

1. Fahrbare Ballenpresse (1) für Stroh, Heu oder ähnliches Halmgut, welche mittels eines sich auf Laufrädern (14, 34, 35) abstützenden Hauptrahmens (4, 12, 24, 46, 46a) seitlich starr mit einer Maschine (6) zum Verpacken eines Ballens lösbar verbunden ist, wobei der Hauptrahmen (4, 12, 24, 46, 46a) auf beiden Seiten der Ballenpresse (1) eine Trennstelle mit Fang-, Führungs- und Verriegelungsvorrichtungen (21, 23, 48) sowie dazu passende Aufnahmen (25, 26, 51) zur Verriegelung jeweils eines vorderen (4, 12, 46) mit einem hinteren Hauptrahmenteil (24, 46a) aufweist, **dadurch gekennzeichnet, dass** die Verbindung zwischen vorderem (4, 12, 46) und hinterem Hauptrahmenteil (24, 46a) durch beidseitige Flanschverbindungen (20, 27, 47, 50) erfolgt, welche selbsttätig verriegelbar sind.

2. Fahrbare Ballenpresse nach Anspruch 1, **dadurch gekennzeichnet, dass** die Ballenpresse (1) und/oder die Maschine (6) zum Verpacken eines Ballens mit Folie wenigstens eine Anhebevorrichtung (16, 17, 18, 36, 38) aufweisen / aufweist mittels der wenigstens ein Hauptrahmenteil (4, 12, 24, 46, 46a) im wesentlichen parallel zu seiner Horizontallage absenkbar bzw. anhebbar ist zum automatischen Entkuppeln bzw. Kuppeln von Ballenpresse (1) und Maschine (6) zum Verpacken des Ballens mit Folie.

3. Fahrbare Ballenpresse nach Anspruch 2, **dadurch gekennzeichnet, dass** eine gesonderte Hubvorrichtung, z. B. ein hydraulisch betätigbarer Stützfuß, an geeigneter Stelle am Hauptrahmen oder am Pressenrahmen angebracht ist.

4. Fahrbare Ballenpresse nach Anspruch 2, **dadurch gekennzeichnet, dass** wenigstens der vordere Hauptrahmen (4, 12) mittels einer Anhebevorrichtung (16, 17, 18) in vertikaler Richtung verstellbar ist und die Laufräder (14) bzw. deren Achsen in horizontaler Richtung verstellbar sind.

5. Fahrbare Ballenpresse nach einem oder mehreren der Ansprüche 1 bis 4, **dadurch gekennzeichnet, dass** wenigstens eine Achse, ein Tandemachsaggregat (14, 15,16) oder jedes Laufrad (34, 35) einzeln im wesentlichen in Längsrichtung der Ballenpresse (1) durch Betätigung eines Stellorganes (18, 38, 38a) verschieb- oder verschwenkbar ist und bei Kombinationsbetrieb von Ballenpresse (1) und Maschine (6) zum Verpacken eines Ballens mit Folie nach hinten versetzt in Position (28) angeordnet ist relativ zu deren Position (30) beim Solobetrieb der Ballenpresse (1).

6. Fahrbare Ballenpresse nach einem oder mehreren der vorhergehenden Ansprüche, **dadurch gekennzeichnet, dass** an jeder Seite der Ballenpresse (1) zwei Laufräder (14) angeordnet sind, die in Fahrtrichtung (X) hintereinander beidendig an Doppelschwingen (16) gelagert sind, die ihrerseits um quer zur Fahrtrichtung (X) liegende, mit den vorderen Hauptrahmenteilen (4, 12) oder mit dem Ballenpressenrahmen verbundenen Pendelachsen (15) schwingbar sind, wobei der Hauptrahmen (4) durch wenigstens eine Laufradpaarachse mittels eines Stellorganes anhebbar bzw. absenkbar ist.

7. Fahrbare Ballenpresse nach einem oder mehreren der vorhergehenden Ansprüche, **dadurch gekennzeichnet, dass** beide Seiten der Pendelachse (15) bzw. die Doppelschwingen (16) durch vertikal oder nahezu vertikal angeordnete Tragschwingen (17) mit dem vorderen Hauptrahmenteil (4, 12) verbunden und durch ein Stellorgan (18) verschiebbar sind.

8. Fahrbare Ballenpresse nach einem oder mehreren der vorhergehenden Ansprüche, **dadurch gekennzeichnet, dass** jedes Laufrad (34, 35) einzeln federnd und / oder hydraulisch beweglich an einer gezogenen Schwinge (36, 36a) aufgehängt ist, wobei ein vorderes Laufradpaar (34) der Ballenpresse (1) und ein hinteres Laufradpaar (35) der Maschine (6) zum Verpacken eines Ballens mit Folie zugeordnet ist mit dazwischengelegener Trennstelle des Hauptrahmens (46, 46a).

9. Fahrbare Ballenpresse nach einem oder mehreren der vorhergehenden Ansprüche, **dadurch gekennzeichnet, dass** die Verschiebung bzw. die Verschwenkung der Laufräder (34, 35) oder der Pendelachse (15) bzw. des Tandemachsaggregates (14 bis 18) hydraulisch vom Schleppersitz erfolgt.

## Claims

1. A mobile baler (1) for straw, hay or similar stalk material, which is connected laterally rigidly and detachably by means of a main frame (4, 12, 24, 46, 46a) supported on running wheels (14, 34, 35) to a machine (6) for packaging a bale, the main frame (4, 12, 24, 46, 46a) comprising on both sides of the baler (1) a separating point with safety catch, guiding and locking devices (21, 23, 48), together with matching receptacles (25, 26, 51) for locking in each case a front main frame part (4, 12, 46) to a rear main frame part (24, 46a), **characterised in that** the front (4, 12, 46) and rear main frame parts (24, 46a) are connected together by flange connections (20, 27, 47, 50) on both sides, which may be locked together automatically.

2. A mobile baler according to claim 1, **characterised in that** the baler (1) and/or the machine (6) for packaging a bale in film has/have at least one lifting device (16, 17, 18, 36, 38), by means of which at least one main frame part (4, 12, 24, 46, 46a) may be lowered or raised substantially parallel to its horizontal position for automatic uncoupling or coupling of the baler (1) and the machine (6) for packaging the bale in film.

3. A mobile baler according to claim 2, **characterised in that** a separate lifting device, e.g. a hydraulically actuatable stand, is attached to the main frame or the baler frame at a suitable point.

4. A mobile baler according to claim 2, **characterised in that** at least the front main frame (4, 12) may be adjusted vertically by means of a lifting device (16, 17, 18) and the running wheels (14) or the axles thereof may be adjusted horizontally.

5. A mobile baler according to one or more of claims 1 to 4, **characterised in that** at least one axle, a tandem axle unit (14, 15, 16) or each running wheel (34, 35) individually is pivotable or displaceable substantially in the longitudinal direction of the baler (1) by actuation of an actuator (18, 38, 38a) and, in the case of combined operation of the baler (1) and the machine (6) for packaging a bale in film, is arranged in the position (28) offset towards the rear relative to the position (30) thereof during solo operation of the baler (1).

6. A mobile baler according to one or more of the preceding claims, **characterised in that** two running wheels (14) are arranged on each side of the baler (1), which wheels (14) are mounted one behind the other in the direction of travel (X) on double rockers (16) at each end, which double rockers (16) may themselves swing around swing axles (15) located transversely of the direction of travel (X) and connected with the front main frame parts (4, 12) or with the baler frame, wherein the main frame (4) may be raised or lowered by at least one running wheel pair axle by means of an actuator.

7. A mobile baler according to one or more of the preceding claims, **characterised in that** both sides of the swing axle (15) or the double rockers (16) may be connected with the front main frame part (4, 12) by vertically or virtually vertically arranged supporting rockers (17) and may be displaced by an actuator (18).

8. A mobile baler according to one or more of the preceding claims, **characterised in that** each running wheel (34, 35) is suspended in individually sprung and/or hydraulically movable manner on a pulled rocker (36, 36a), wherein a front running wheel pair (34) of the baler (1) and a rear running wheel pair (35) of the machine (6) for packaging a bale in film are associated with an intermediate separating point of the main frame (46, 46a).

9. A mobile baler according to one or more of the preceding claims, **characterised in that** displacement or pivoting of the running wheels (34, 35) or the swing axle (15) or the tandem axle unit (14 to 18) is effected hydraulically from the tractor seat.

## Revendications

1. Presse à balles mobile (1) pour paille, foin ou autres chaumes, laquelle, au moyen d'un châssis porteur (4, 12, 24, 46, 46a) en appui sur des roues de roulement (14, 34, 35), est assemblée de manière détachable rigidement sur les côtés à une machine (6) pour l'emballage d'une balle, le châssis porteur (4, 12, 24, 46, 46a) comportant sur les deux côtés de la presse à balles (1) une zone de séparation avec des dispositifs d'attache, de guidage et de verrouillage (21, 23, 48), ainsi que des logements (25, 26, 51) adaptés à ceux-ci et destinés à verrouiller une partie avant (4, 12, 46) du châssis porteur avec une partie arrière (24, 46a) du châssis porteur, **caractérisée en ce que** l'assemblage entre la partie avant (4, 12, 46) du châssis porteur et la partie arrière (24, 46a) du châssis porteur est effectué par des raccords à brides (20, 27, 47, 50), qui sont agencés sur les deux côtés et qui peuvent se verrouiller automatiquement.

2. Presse à balles mobile selon la revendication 1, **caractérisée en ce que** la presse à balles (1) et/ou la machine (6) pour l'emballage d'une balle dans un film comporte/comportent au moins un dispositif de levage (16, 17, 18, 36, 38), au moyen duquel au moins une partie du châssis porteur (4, 12, 24, 46, 46a) peut être abaissée ou levée sensiblement parallèlement à sa position horizontale pour le dételage ou l'attelage automatique de la presse à balles (1) et la machine (6) pour l'emballage d'une balle dans un film.

3. Presse à balles mobile selon la revendication 2, **caractérisée en ce qu'**un dispositif relevable séparé, tel qu'une béquille actionnable par voie hydraulique, est agencé en un emplacement approprié sur le châssis porteur ou sur le châssis de la presse.

4. Presse à balles mobile selon la revendication 2, **caractérisée en ce qu'**au moins le châssis porteur avant (4, 12) peut être déplacé dans la direction verticale au moyen d'un dispositif de levage (16, 17, 18) et les roues de roulement (14), plus précisément les essieux de celles-ci, sont déplaçables dans la direction horizontale.

5. Presse à balles mobile selon une ou plusieurs des revendications 1 à 4, **caractérisée en ce qu'**au moins un essieu, une unité à essieu tandem (14, 15, 16) ou chaque roue de roulement (34, 35) peut être déplacé ou peut pivoter séparément sensiblement dans le sens longitudinal de la presse à balles (1) par la manoeuvre d'un organe de réglage (18, 38, 38a) et, en cas d'utilisation combinée de la presse à balles (1) et de la machine (6) pour l'emballage d'une balle dans un film, est dans la position (28) décalée vers l'arrière par rapport à sa position (30) en cas d'utilisation en solo de la presse à balles (1).

6. Presse à balles mobile selon une ou plusieurs des revendications précédentes, **caractérisée en ce que** sur chaque côté de la presse à balles (1) sont agencées deux roues de roulement (14), qui sont montées l'une derrière l'autre dans la direction de roulement (X) aux deux extrémités contre des bielles doubles (16) qui, pour leur part, peuvent osciller autour d'essieux oscillants (15) disposés transversalement à la direction de roulement (X) et reliés avec les parties avant du châssis porteur (4, 12) ou avec le châssis de la presse à balles, le châssis porteur (4) pouvant être levé ou abaissé par l'intermédiaire d'au moins un essieu d'une paire de roues au moyen d'un organe de réglage.

7. Presse à balles mobile selon une ou plusieurs des revendications précédentes, **caractérisée en ce que** les deux côtés de l'essieu oscillant (15) ou les bielles doubles (16) sont assemblés à la partie avant du châssis porteur (4, 12) par des bielles de support (17), agencées verticalement ou pratiquement verticalement, et peuvent être déplacés par un organe de réglage (18).

8. Presse à balles mobile selon une ou plusieurs des revendications précédentes, **caractérisée en ce que** chaque roue de roulement (34, 35) est suspendue séparément, par ressort et/ou par voie hydraulique, de manière mobile contre une bielle (36, 36a) en extension, une paire avant de roues de roulement (34) de la presse à balles (1) et une paire arrière de roues de roulement (35) de la machine (6) pour l'emballage d'une balle dans un film étant associées à une zone de séparation intercalée du châssis porteur (46, 46a).

9. Presse à balles mobile selon une ou plusieurs des revendications précédentes, **caractérisée en ce que** le déplacement ou le pivotement des roues de roulement (34, 35) ou de l'essieu oscillant (15) ou de l'unité à essieu tandem (14 à 18) est assuré par voie hydraulique à partir du siège du tracteur.
